# FASCICULE DE BREVET EUROPEEN

(11) **EP 0 943 476 B1**
(45) Date de publication et mention de la délivrance du brevet: **11.06.2003**
(21) Numéro de dépôt: 99200770.8
(22) Date de dépôt: 12.03.1999
(51) Int. Cl.: B60K 15/035

(54) **Circuit de mise à l'air pour réservoir à liquide**
Entlüftungskreislauf für Flüssigkeitsbehälter
Venting circuit for fluid reservoir

(30) Priorité: 18.03.1998 FR 9803409
(43) Date de publication de la demande: 22.09.1999
(73) Titulaire: Inergy Automotive Systems Research (SA), 1120 Bruxelles (BE)
(72) Inventeur: Thibaut, Denis, 48084 Troy, MI (US); van Schaftingen, Jules-Joseph, 1300 Wavre (BE); Wouters, Paul, 1800 Vilvoorde (BE)
(74) Mandataire: Decamps, Alain René François

(56) Documents cités:
- DE-A- 3 224 943
- DE-A- 3 342 871
- DE-A- 4 311 470
- PATENT ABSTRACTS OF JAPAN vol. 018, no. 119 (M-1567), 25 février 1994 -& JP 05 310050 A (HORIE KINZOKU KOGYO KK), 22 novembre 1993

## Description

La présente invention concerne un circuit de mise à l'air pour réservoir à liquide, en particulier pour réservoir à carburant équipant un véhicule automobile.

Les réservoirs à liquide, en particulier les réservoirs à carburant pour véhicules automobiles, comportent généralement un circuit de mise à l'air. Ce circuit permet l'évacuation de l'air et des gaz présents dans le réservoir, au-dessus du liquide. Il évite ainsi la mise en pression ou en dépression du réservoir suite à des variations de volume de liquide dues notamment à des fluctuations de température ou de pression atmosphérique ou à l'abaissement du niveau de liquide par prélèvement.

Pour des raisons d'encombrement et, en particulier, de conception interne du véhicule, le réservoir peut être de forme complexe. A cet effet notamment, il est avantageusement réalisé à partir de matière thermoplastique. Il comporte souvent à sa paroi supérieure, des excavations ou régions susceptibles de renfermer des poches de gaz indépendantes lorsque le liquide atteint un niveau élevé dans le réservoir et/ou lorsque le véhicule est incliné. Chacune de ces régions doit dès lors comporter au moins un point de ventilation en vue d'assurer sa mise à l'air. Les différents points de ventilation peuvent être reliés directement au milieu extérieur (montage en parallèle) ou, plus simplement, être reliés entre eux avec une seule mise à l'air. Dans ce dernier cas, compte tenu de la géométrie du réservoir, la ou les tubulures reliant les points de ventilation comportent généralement une ou plusieurs parties inférieures en forme de siphon. L'efficacité d'un ou de certains points de ventilation peut dès lors être compromise si un bouchon de liquide vient obstruer cette ou ces parties suite, par exemple, à des changements d'inclinaison du réservoir ou à des mouvements de vagues.

Une solution connue pour empêcher la formation de ce bouchon de liquide consiste à munir chaque point de ventilation d'un clapet à flotteur. Cette solution est onéreuse et ne permet par ailleurs pas d'éviter que des gouttes de liquide ou de gaz condensés ne s'accumulent dans certaines parties du circuit de mise à l'air, notamment dans le ou les siphons, et n'obstruent le circuit de mise à l'air.

Le brevet allemand 4311470, qui est considéré l'état de la technique le plus proche, concerne un circuit de mise à l'air pour réservoir à carburant de véhicule automobile comportant deux dômes reliés par une tubulure en forme de U dont les extrémités aboutissent chacune dans la partie supérieure d'un des deux dômes. La partie inférieure de cette tubulure est reliée par une canalisation à une pompe à jet actionnée par le flux de carburant excédentaire revenant du moteur. La solution proposée dans ce brevet n'est évidemment applicable qu'aux systèmes d'alimentation en carburant ayant un retour de carburant excédentaire, et non aux systèmes où le débit est régulé de manière à éviter cet excédent. En outre, le système proposé est d'une efficacité variable selon le régime du moteur, puisque celui-ci conditionne la consommation et donc également, le retour de carburant excédentaire.

L'invention a dès lors pour objet de proposer un circuit de mise à l'air de réservoir à liquide dont la paroi supérieure comprend au moins deux régions susceptibles de contenir des poches de gaz, ledit circuit étant constitué d'au moins une tubulure de ventilation ayant au moins une partie en forme de siphon et où la formation d'un bouchon de liquide est évitée par un dispositif fiable et économique, compatible avec tout type d'alimentation en liquide (avec ou sans retour vers le réservoir) et d'efficacité constante, quelle que soit le régime du moteur.

L'invention concerne donc un circuit de mise à l'air pour réservoir à liquide dont la paroi supérieure comprend au moins deux régions susceptibles de contenir des poches de gaz, ledit circuit étant constitué d'au moins une tubulure de ventilation reliant des points de ventilation situés dans la partie supérieure des régions et une mise à l'air, et présentant au moins une partie inférieure en forme de siphon connectée par une canalisation à un point en dépression à l'intérieur du réservoir de manière à permettre l'évacuation du liquide présent dans le circuit de mise à l'air, qui se caractérise en ce que la dépression est générée par la pompe de prélèvement du liquide.

Le réservoir à liquide comporte à sa paroi supérieure, des régions susceptibles de renfermer des poches de gaz apparaissant simultanément ou non, lorsque le liquide atteint un niveau élevé dans le réservoir et/ou lorsque le réservoir est incliné. En particulier, ces régions sont chacune en forme de dôme. Dans un mode de réalisation spécifique, le réservoir comporte à sa paroi supérieure, deux régions telles que susdéfinies.

Par circuit de mise à l'air, on entend désigner le dispositif qui permet l'évacuation des gaz présents dans ces poches et évite la mise en pression ou en dépression du réservoir suite à des variations de volume de liquide dues notamment à des fluctuations de température ou de pression atmosphérique ou à l'abaissement du niveau de liquide par prélèvement. Il comporte des points de ventilation situés dans la partie supérieure des régions où peuvent se trouver les poches de gaz, au-dessus du niveau maximum de liquide admissible dans le réservoir et reliés entre eux et à la mise à l'air par au moins une tubulure de ventilation.

Par mise à l'air, on entend tout dispositif courant permettant le rejet à l'atmosphère de gaz contenus dans le réservoir, éventuellement épurés au moyen d'un filtre tel qu'un canister pour des raisons écologiques.

D'excellents résultats ont été obtenus lorsque la tubulure de ventilation relie les différents points de ventilation présents dans chaque région susceptible de contenir une poche de gaz.

Le circuit de mise à l'air peut être constitué d'un ou de plusieurs éléments en un ou plusieurs matériaux, et en particulier en matière thermoplastique. De manière avantageuse, la ou les tubulures de ventilation et la canalisation sont à base d'une ou de plusieurs matières thermoplastiques. Par matière thermoplastique, on entend désigner un ou plusieurs polymères thermoplastiques. Les polymères peuvent être des homopolymères, copolymères ou leurs mélanges. A titre de tels polymères, on peut retenir par exemple des polyoléfines, des polyamides, des polycétones ou des polymères fluorés. De bons résultats ont été obtenus à partir de polyamides.

A la matière thermoplastique peuvent évidemment être ajoutés un ou plusieurs additifs usuels tels que antioxydants, stabilisants, pigments ou autres.

Le circuit de mise à l'air dispose d'une géométrie, d'une configuration et de dimensions adaptées de manière connue à l'encombrement et à la conception de l'environnement interne et/ou externe au réservoir, de même qu'aux exigences de fonctionnement.

La pompe de prélèvement du liquide est une pompe de tout type connu, actionnée par un moteur quelconque et destinée à prélever du liquide hors du réservoir pour alimenter un circuit de distribution de ce liquide. Elle génère ainsi une dépression où débouche la canalisation connectée à la partie inférieure du siphon. Cette dépression est généralement constante, la plupart des systèmes d'alimentation en carburant, avec ou sans retour de carburant excédentaire, travaillant avec un débit de pompe d'alimentation constant. L'efficacité du circuit de mise à l'air selon l'invention est donc généralement constante quel que soit le régime du moteur.

Le circuit de mise à l'air est destiné à un réservoir quelconque. Il équipe toutefois avantageusement un réservoir pour véhicule automobile. D'excellents résultats ont été obtenus avec un réservoir à carburant.

De manière avantageuse, un dispositif anti-retour est placé à l'extrémité de la canalisation permettant l'évacuation du liquide et débouchant au point en dépression à l'intérieur du réservoir. Ce dispositif est de tout type connu, tel qu'un clapet anti-retour par exemple. Il évite que le liquide ne remonte dans la canalisation reliant la partie inférieure du siphon au point en dépression du réservoir lorsque le moteur qui actionne la pompe est arrêté.

Le clapet anti-retour susmentionné est souvent un clapet à flotteur comportant généralement une enceinte qui laisse passer les gaz et une pièce mobile qui coulisse dans celle-ci pour venir obturer un orifice de connexion entre deux cavités. Lorsque le liquide monte dans la cavité où est située la pièce mobile et qu'il l'atteint, elle se met à flotter à la surface du liquide et en coulissant dans l'enceinte, vient obturer l'orifice de connexion avec l'autre cavité. Un dispositif assurant l'étanchéité du clapet dans sa position fermée lui est préférentiellement associé de manière connue.

Les points de ventilation peuvent être reliés entre eux par une ou plusieurs tubulures de ventilation. Ils peuvent de manière avantageuse être reliés en série par une seule tubulure de ventilation traversant successivement différentes régions, le dernier point de ventilation étant relié à la mise à l'air par la section finale de la tubulure de ventilation.

Des résultats particulièrement intéressants ont aussi été obtenus avec un circuit de mise à l'air comprenant un réseau maillé de tubulures de ventilation reliant les points de ventilation. Par réseau maillé, on entend un enchevêtrement de tubulures interconnectées plus ou moins régulièrement en plusieurs endroits. De préférence, le réseau maillé relie de manière homogène toutes les régions où peuvent se trouver des poches de gaz. Dans un mode de réalisation particulier, plusieurs points de ventilation sont prévus au sein de une ou de plusieurs régions. Le fait d'avoir plusieurs points de ventilation interconnectés dans certaines régions permet ainsi de garantir au moins une connexion avec la mise à l'air, quelle que soit l'intensité ou l'axe de l'inclinaison du réservoir.

Dans le cas d'un réservoir susceptible d'être animé de mouvements, une réduction sensible des émissions acoustiques est obtenue grâce à ces multiples mises en communication des différentes poches de gaz.

Lorsque l'invention est mise en oeuvre avec un tel circuit maillé, on obtient un circuit de mise à l'air fiable et économique, compatible avec tout dispositif d'alimentation et réduisant en outre les émissions acoustiques en cas de mouvement du réservoir.

L'invention concerne dès lors également un circuit de mise à l'air tel que décrit précédemment, dans lequel les tubulures de ventilation forment un réseau maillé reliant des points de ventilation. De manière avantageuse, ce réseau maillé interconnecte les différentes régions où peuvent se trouver des poches de gaz.

Selon un mode de réalisation particulier, un ou plusieurs points de ventilation sont avantageusement munis d'un clapet à flotteur tel que décrit précédemment, pour éviter l'obstruction du circuit de mise à l'air dans une situation particulière du réservoir.

Dans le cas d'un montage en série des points de ventilation, tous les points de ventilation à l'exception du premier de la série (le plus éloigné de la mise à l'air), sont avantageusement pourvus d'un clapet à flotteur.

Dans le cas d'un montage en réseau maillé des points de ventilation, tous les points de ventilation sont avantageusement pourvus d'un clapet à flotteur.

Moyennant la présence de ces clapets à flotteurs aux endroits indiqués, le dispositif est également efficace en cas d'arrêt du moteur qui actionne la pompe de prélèvement du liquide, lorsque le réservoir est rempli et/ou incliné.

Pour éviter en toute hypothèse que du liquide ne s'échappe vers l'atmosphère, notamment lorsque le réservoir est à l'envers, la section finale de la tubulure de ventilation peut avantageusement être munie d'une vanne anti-retournement empêchant le passage du liquide.

Le circuit de mise à l'air selon l'invention peut être externe ou, en tout ou en partie, interne au réservoir à liquide. Toutefois, le circuit de mise à l'air sera de préférence interne au réservoir à liquide.

Le réservoir à liquide peut être en toute matière connue. De préférence, il est réalisé à base de matière thermoplastique. Il peut être obtenu de toute manière connue, soit directement en une seule pièce, soit par assemblage de plusieurs parties. La réalisation de la ou des tubulures de ventilation est toutefois plus aisée lorsqu'il y a un accès direct à la paroi supérieure interne du réservoir. Par conséquent, le réservoir sera de préférence obtenu par assemblage de deux parties préformées.

Le circuit de mise à l'air décrit ci-dessus garantit la ventilation du réservoir à liquide par un dispositif fiable et économique, compatible avec tout type d'alimentation en liquide (avec ou sans retour vers le réservoir). Il est donc avantageusement associé à un réservoir à liquide.

L'invention concerne dès lors également un réservoir à liquide équipé d'un circuit de mise à l'air tel que défini ci-dessus.

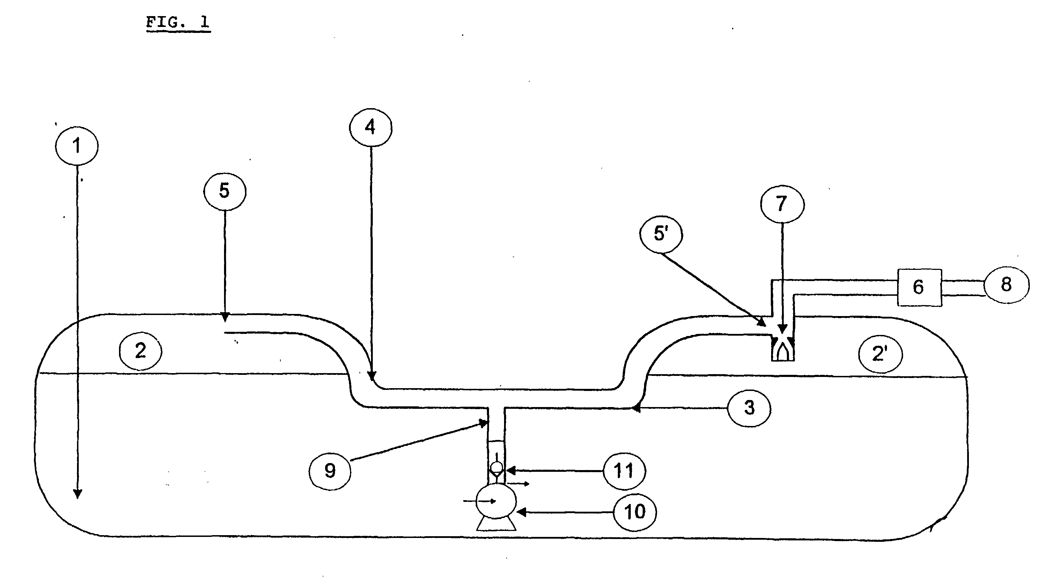

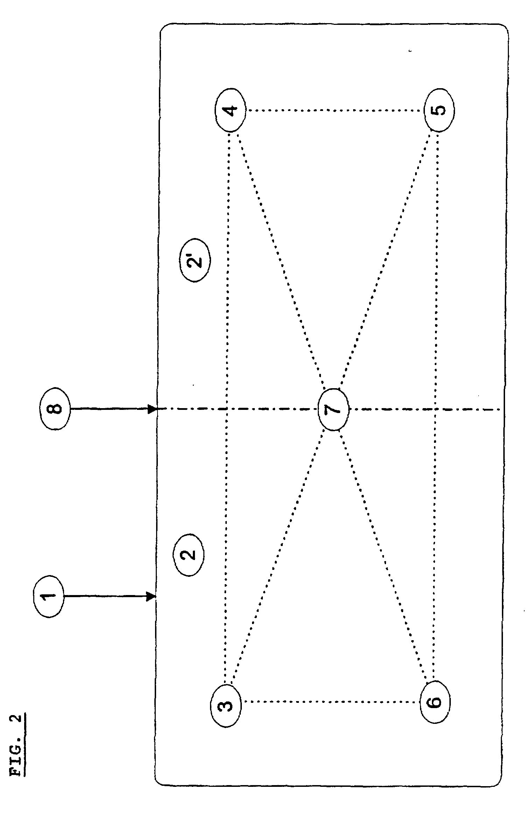

L'invention est illustrée de manière non limitative par les figures 1 et 2.

La figure 1 représente un réservoir à carburant pour véhicule automobile (1) comprenant deux dômes (2)(2') à sa paroi supérieure, qui renferment des poches de gaz indépendantes lorsque le niveau de carburant atteint ou dépasse le plan de jonction entre les dômes (3) ou même un niveau inférieur à celui-ci, lorsque le réservoir est incliné.

Un circuit de mise à l'air selon l'invention, est installé à l'intérieur du réservoir à carburant comprenant deux points de ventilation (5)(5') reliés en série à la mise à l'air (8) par une tubulure de ventilation (4), le point de ventilation précédant la mise à l'air (5') étant muni d'un clapet à flotteur (7), et comprenant en outre une partie inférieure en forme de siphon reliée à la dépression générée par la pompe de prélèvement du liquide (10), par une canalisation (9) munie à sa base d'un clapet anti-retour (11).

Le système d'alimentation en carburant est tel que la dépression générée par la pompe est constante quel que soit le régime du moteur.

La mise à l'air (8) est précédée d'un clapet anti-retournement (6) pour éviter en toute hypothèse que du liquide ne s'échappe vers l'atmosphère, notamment lorsque le réservoir est à l'envers.

Lorsque le moteur tourne, quelle que soit l'inclinaison et le niveau de remplissage du réservoir, le carburant éventuellement présent dans la tubulure de ventilation (4) tombe par gravité dans la canalisation (9) où il est aspiré par la dépression créée par la pompe (10) de manière à ramener le niveau de carburant dans la canalisation (9) en-dessous du niveau de carburant dans le réservoir, la différence de niveaux étant fonction de la dépression générée par la pompe. Celle-ci est constante quel que soit le régime du moteur.

Lorsque le moteur est à l'arrêt et donc la pompe (10) également, le clapet anti-retour (11) empêche le carburant de remonter dans la canalisation (9). Si en outre le véhicule est à l'arrêt en position inclinée, avec le point de ventilation (5') vers le bas, le clapet à flotteur (7) évite la pénétration de carburant dans la tubulure de ventilation (4) et donc, la formation d'un bouchon de carburant qui empêcherait la ventilation du dôme (2).

La figure 2 représente, de manière schématique, la paroi supérieure d'un réservoir à carburant pour véhicule automobile ayant un circuit maillé de tubulures de ventilation reliant les différents points de ventilation munis de clapets à flotteurs.

Le réservoir à carburant (1) comprend deux dômes (2)(2') comme dans le cas de la figure 1, disposés de part et d'autre du plan médian (8).

Le réseau maillé de tubulures de ventilation relie les points de ventilation situés à chacun de ses noeuds (3)(4)(5)(6), excepté au point central (7). Ces points de ventilation comportent chacun un clapet à flotteur (non représenté). Les tubulures du réseau comportent aux alentours du plan médian (8), des parties inférieures en forme de siphon. Le point central (7) est lié à la mise à l'air mais également par une canalisation, à la dépression générée par la pompe de prélèvement du carburant (non représentée). Cette canalisation est pourvue d'un clapet anti-retour à sa base, près de la jonction avec la pompe.

Comme dans le cas de la figure 1, le fonctionnement du circuit de mise à l'air est assuré de manière constante quel que soit le régime du moteur et il est également assuré lorsque le moteur est à l'arrêt.

En outre, lorsque le véhicule est en mouvement, les émissions acoustiques résultant du mouvement des fluides dans le réservoir sont atténués suite aux multiples mises en communications des deux poches de gaz.

## Revendications

1. Circuit de mise à l'air pour réservoir à liquide (1) dont la paroi supérieure comprend au moins deux régions (2, 2') susceptibles de contenir des poches de gaz, ledit circuit étant constitué d'au moins une tubulure de ventilation (4) reliant des points de ventilation (5, 5') situés dans la partie supérieure des régions et présentant au moins une partie inférieure en forme de siphon connectée par une canalisation (9) à un point en dépression à l'intérieur du réservoir de manière à permettre l'évacuation du liquide présent dans le circuit de mise à l'air, selon lequel la dépression est générée par une pompe (10) de prélèvement du liquide, **caractérisé en ce que** la pompe (10) est actionnée par un moteur et prélève du liquide hors du réservoir pour alimenter un circuit de distribution de ce liquide.

2. Circuit de mise à l'air selon la revendication 1, dans lequel le réservoir à liquide (1) est un réservoir à carburant.

3. Circuit de mise à l'air selon l'une quelconque des revendications précédentes, dans lequel un dispositif anti-retour (11) est placé à l'extrémité de la canalisation (9) permettant l'évacuation du liquide et débouchant au point en dépression à l'intérieur du réservoir.

4. Circuit de mise à l'air selon l'une quelconque des revendications 1 à 3, dans lequel les points de ventilation (5, 5') sont reliés en série par une seule tubulure de ventilation traversant successivement différentes régions, le dernier point de ventilation étant relié à la mise à l'air (8) par la section finale de la tubulure de ventilation (5').

5. Circuit de mise à l'air selon l'une quelconque des revendications 1 à 3, dans lequel les tubulures de ventilation forment un réseau maillé reliant des points de ventilation.

6. Circuit de mise à l'air selon la revendication 5, dans lequel le réseau maillé interconnecte différentes régions.

7. Circuit de mise à l'air selon l'une quelconque des revendications précédentes, dans lequel au moins un point de ventilation est muni d'un clapet à flotteur (7).

8. Circuit de mise à l'air selon l'une quelconque des revendications précédentes, dans lequel le circuit de mise à l'air est interne au réservoir à liquide.

9. Circuit de mise à l'air selon l'une quelconque des revendications précédentes, dans lequel le réservoir à liquide (1) est obtenu par assemblage de deux parties préformées.

10. Réservoir à liquide (1) équipé d'un circuit de mise à l'air selon l'une quelconque des revendications précédentes.

## Patentansprüche

1. Entlüftungskreislauf für Flüssigkeitsbehälter (1), deren obere Wand zumindest zwei Bereiche (2, 2') aufweist, die Gastaschen aufnehmen können, wobei der Kreislauf zumindest ein Entlüftungsrohr (4), welches Entlüftungsstellen (5, 5') verbindet, welche im oberen Teil der Bereiche liegen, und zumindest einen unteren Teil in Form eines Siphon aufweist, der durch eine Rohrleitung (9) mit einer Unterdruckstelle im Inneren des Behälters verbunden ist, um ein Austragen der im Entlüftungskreislauf vorhandenen Flüssigkeit zu gestatten, wobei der Unterdruck durch eine Pumpe (10) zum Heben von Flüssigkeit erzeugt wird, **dadurch gekennzeichnet, daß** die Pumpe (10) durch einen Motor betätigt wird und die Flüssigkeit aus dem Behälter hebt, um einen Flüssigkeitsverteilerkreis zu speisen.

2. Entlüftungskreislauf nach Anspruch 1, bei welchem der Behälter (1) ein Kraftstoffbehälter ist.

3. Entlüftungskreislauf nach Anspruch 1 oder 2, bei welchem eine Rückschlagvorrichtung (11) am Ende der Rohrleitung (9) vorgesehen ist, welche das Austragen der Flüssigkeit gestattet und an der Unterdruckstelle im Inneren des Behälters mündet.

4. Entlüftungskreislauf nach einem der Ansprüche 1 bis 3, bei welchem die Entlüftungsstellen (5, 5') in Reihe durch eine einzige Entlüftungsleitung verbunden sind, welche die verschiedenen Bereiche nacheinander durchsetzt, wobei die letzte Entlüftungsstelle mit dem Luftaustritt (8) durch den Endabschnitt der Entlüftungsleitung (5') verbunden ist.

5. Entlüftungskreislauf nach einem der Ansprüche 1 bis 3, bei welchem die Entlüftungsrohre ein Netzwerk bilden, welches die Entlüftungsstellen verbindet.

6. Entlüftungskreislauf nach Anspruch 5, bei welchem das Netzwerk die verschiedenen Bereiche verbindet.

7. Entlüftungskreislauf nach einem der vorhergehenden Ansprüche, bei welchem zumindest eine Entlüftungsstelle mit einem Schwimmerverschluß (7) versehen ist.

8. Entlüftungskreislauf nach einem der vorhergehenden Ansprüche, bei welchem sich der Kreislauf innerhalb des Flüssigkeitsbehälters befindet.

9. Entlüftungskreislauf nach einem der vorhergehenden Ansprüche, bei welchem der Flüssigkeitsbehälter (1) aus vorgeformten Teilen zusammengebaut wird.

10. Flüssigkeitsbehälter (1), der mit einem Entlüftungskreislauf nach einem der vorhergehenden Ansprüche ausgestattet ist.

## Claims

1. Venting circuit for a liquid tank, the upper wall of which comprises at least two regions liable to contain pockets of gas, the said circuit consisting of at least one ventilation tubing connecting ventilation points located in the upper part of the regions and having at least one siphon-shaped lower part connected via a pipe to a point under vacuum inside the tank so as to allow the liquid present in the venting circuit to be removed, **characterized in that** the vacuum is created by the pump for drawing off the liquid.

2. Venting circuit according to Claim 1, in which the liquid tank is a fuel tank.

3. Venting circuit according to either of the preceding claims, in which the non-return device is placed at the end of the pipe allowing the liquid to be removed and emerging at a point under vacuum inside the tank.

4. Venting circuit according to any one of Claims 1 to 3, in which the ventilation points are connected in series by a single ventilation tubing which passes in succession through various regions, the final ventilation point being connected to the vent via the final section of the ventilation tubing.

5. Venting circuit according to any one of Claims 1 to 3, in which the ventilation tubings form a meshed network connecting ventilation points.

6. Venting circuit according to Claim 5, in which the meshed network interconnects various regions.

7. Venting circuit according to any one of the preceding claims, in which at least one ventilation point is provided with a float valve.

8. Venting circuit according to any one of the preceding claims, in which the venting circuit is internal to the liquid tank.

9. Venting circuit according to any one of the preceding claims, in which the liquid tank is obtained by joining two preformed parts together.

10. Liquid tank fitted with a venting circuit according to any one of the preceding claims.
